# EUROPEAN PATENT SPECIFICATION

(11) **EP 2 617 117 B1**
(45) Date of publication and mention of the grant of the patent: **20.12.2017**
(21) Application number: 11825500.9
(22) Date of filing: 13.09.2011
(51) Int. Cl.: H02J 7/00, H01R 13/60, H01R 13/72

(54) **DEVICE FOR CHARGING OF RECHARGEABLE BATTERIES**
VORRICHTUNG ZUM AUFLADEN VON AKKUS
DISPOSITIF POUR LA CHARGE DE BATTERIES RECHARGEABLES

(30) Priority: 13.09.2010 NO 20101286
(43) Date of publication of application: 24.07.2013
(73) Proprietor: Defa AS Automotive Division, 1301 Sandvika (NO)
(72) Inventor: EIDSVIG, Didrik, N-1301 Sandvika (NO)
(74) Representative: Zacco Norway AS
(86) International application number: PCT/NO2011/000245
(87) International publication number: WO 2012/036556

(56) References cited:
- EP-A2- 0 293 664
- DE-C1- 4 026 020
- FR-A3- 2 501 932
- US-A- 4 396 881

## Description

The present invention relates to a charging device for charging of lead batteries and other rechargeable battery types. The invention relates in particular to so called "domestic chargers" which can be used especially for the charging of lead batteries for vehicles.

Many different types of devices for charging of lead batteries and other batteries are known. What is common for many of these chargers is that the charging device is fitted with a long row of buttons/switches, where the user is faced with a number of choices that must be made to start the charging process. Furthermore, a well known problem with many chargers is that sparks are generated when making the connection to the battery. Another problem is that the cable ends, both for connection to the battery and to the mains, are not easily handled in a simple and sensible way when the product shall be tidied away and be stored after use.

Therefore, the inventor has provided a charging device where focus is given to the user and to the ease of operation. The charging device is characterised in that a simple, clean and functional design which takes into consideration that the connection cables are coiled and fastened to the product housing. The coiling and fastening steps are integrated in a new and innovative way. The user only needs to uncoil the cables and then to connect the crocodile clamps to the battery and make the connection to the mains. Thereafter the charging is initiated by pushing the on/off button. This will be regarded as very safe as the user is not exposed to unnecessary sparks and the like in the connection process. The charger will itself detect and adjust the charging process according to the size of the battery and the surrounding temperature. During charging and after completion of the charging the indicator on the charger will, at any time, give the status of the charging. The charging will finish on its own or in that the user presses stop to terminate.

For this purpose a software program is developed that is adapted to a charging process for batteries of any size and condition. In addition, attention is given to a simple, clear and, not least, user-friendly interface with the help of the on/off button of the unit and the display.

The form of the charging device and the mechanical design of its components are very demanding as both the mains cable and the battery cables are easily coiled round after use and fastened to the product so that these are firmly secured during storage. Both the clamps and the mains plug are fastened to the housing. These considerations mean that special adaptations are made on the electronic components and the edb board.

It has also been an assumption that in the design a compact unit is made with corresponding layout and choice of components so that the unit is as small as possible. This means that the heat loss through the housing of the product has been a critical parameter. The collaboration between electronics and mechanics is carried out in such a way that it does not lead to overheating of the electronic parts.

In addition, some extra equipment for connecting has been developed. For this purpose a watertight plug that can be taken out and inserted again is formed on the battery cable. This gives the possibility of connection of the additional equipment that, among other things, comprises cables with eyelet terminals and a plug to the battery charger. This means that the user can fit a series of permanent cables, with a corresponding plug on the batteries, to a part of the motorised equipment that requires regular charging. The charger can then be easily transported from location to location to carry out the charging job. A small, removable battery indicator is also developed that can be connected to this equipment to indicate whether a battery needs charging or not.

These, and other aims and advantages are achieved with a charging device for charging of lead batteries and other rechargeable battery types, encompassing a housing with a transformer, cable with a plug for connection to the mains, cables for supply of electric power to the battery, clamping means for connection to the poles of a battery, a switch for the activation and deactivation of the charging device and at least one visual indicator to give the user an indication of the charging progress, characterised in that the housing has a shape so that the cables and the plug are completely, or partly, lying in the housing and the clamping devices are fastened to the holding means that protrudes from the housing, when the device is not in use, as each holding means comprises two protruding elements, that the cables for the connection of the battery are coiled around the circumference of the housing between each of the protruding elements of the respective holding means.

The cable for connection to the mains is preferably coiled around the periphery of the housing and the plug is preferably placed in a recess in the housing when the device is not in use.

The paths of the coiling of the cable with the plug and the cables for connection to the battery are preferably, in the main, in parallel and axially displaced in relation to each other.

Furthermore, the device preferably comprises an electronic unit that measures/senses which type of battery that is to be charged, the surrounding temperature and the battery capacity.

The electronic unit preferably controls the charging voltage and the charging process as a function of the measured parameters.

The device comprises an indicator that gives the user a visual indication of the charging process.

The charging device is preferably adapted to charging open and closed lead batteries, AMG batteries and gel batteries with a capacity of 4-225 Ah.

The indicator preferably comprises at least one LED.

The invention will now be explained in more detail with the help of an embodiment example with reference to the enclosed figures, where:
Figs. 1-3 show a charging device according to the present invention, seen in perspective from different directions.
Fig. 4 shows an example of a typical course of charging at a charge current of 4 A.

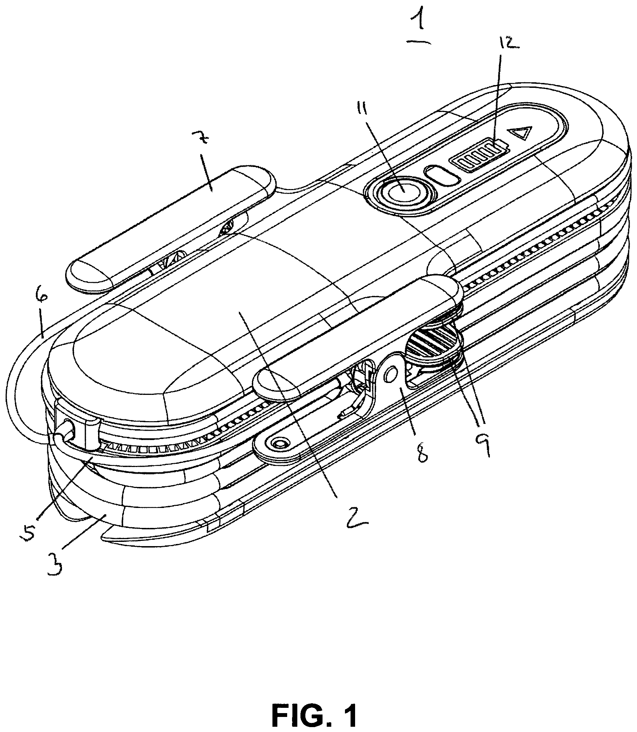

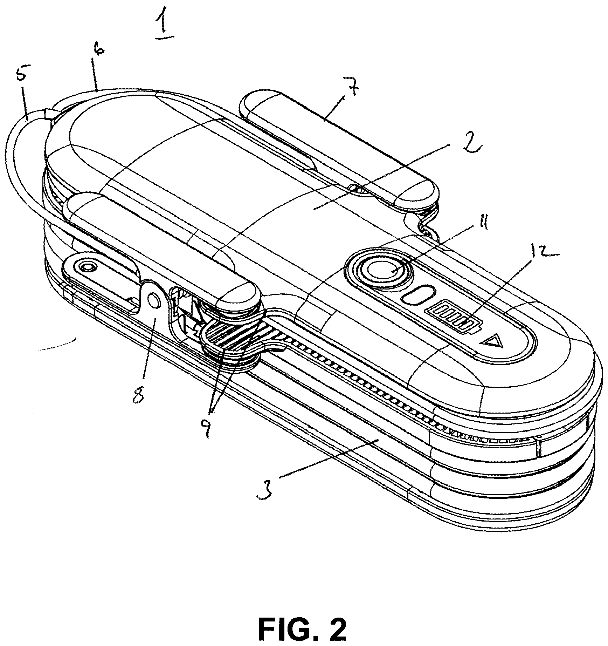

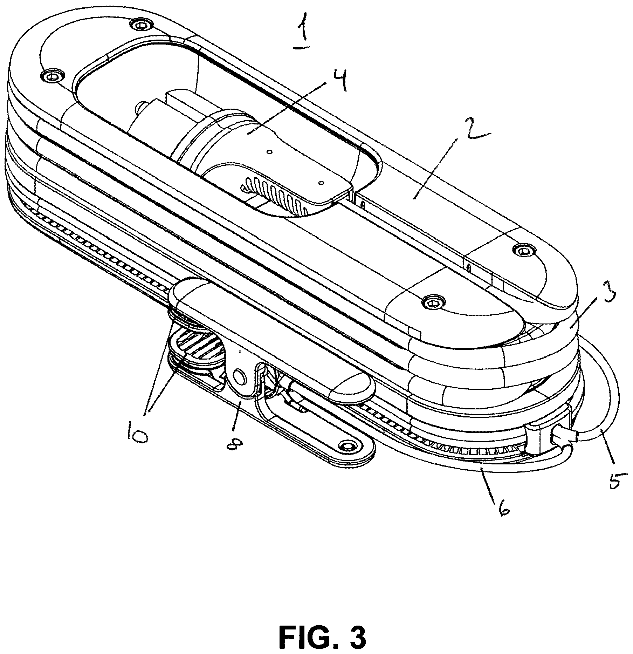

An embodiment of the charging unit according to the present invention is shown in the figures 1-3.

The charging unit, referred to as 1, comprises a housing 2, connected to said housing 2 is a mains cable 3 with a plug 4 for connection to a mains socket, and two cables 5, 6, for connection to respective battery poles. The cables 5, 6 are connected to their own clamping device 7, 8. The clamping devices 7, 8 are shaped so that they can engage with respective poles on a battery. Furthermore, the clamping devices 7, 8 are formed so that they can be fastened to respective holding means 9, 10 on the housing 2 when the charging unit 1 is not in use. Each holding means 9, 10 comprises two protruding elements, to which elements respective clamping devices can be fastened when the device is not in use. The cable 3 for connection to the mains is coiled around the periphery of the housing 2 and the plug 4 is placed in a recess in the housing 2 when the device is not in use. The coil paths of the cable 3 for connection to the mains and the cables 5, 6 for connection to the battery are, in the main, in parallel and axially displaced with respect to each other.

This means that the device will be very compact and all cables will be kept in place when the device is not in use, so that it is simple to store the device and it will be very simple to remove the cables and the clamping devices when the charging unit is to be used.

Furthermore, a switch 11 is arranged on the housing 2 with which the charging unit can be activated. Furthermore, the charging unit 2 is fitted with an indicator 12 that shows the operating state of the charging device.

Furthermore, an electronic unit (not shown) is placed in the housing 2 that measures/senses the type of battery which is to be charged, controls the charging process and switches off the device after the charging is completed.

The electronic unit will automatically detect the size of the battery (battery capacity) and find a suitable charge voltage. Furthermore, the surrounding temperature will be detected and the electronic unit will compensate the charge voltage accordingly.

The charging device can be used for batteries with a capacity of 4 - 225 Ah and battery types that can be charged with the help of the device are open and closed lead batteries, so called AGM batteries and gel batteries.

The charging device according to the invention functions as follows:
The charger is connected to the battery that is to be charged with the help of the clamping devices 8, 9 and the plug 4 is placed in a wall socket or the like, which supplies a voltage of 230V. The charging commences when the switch 11 is activated. The charging device can also be used as a current supply for a limited period, and this time period is determined by the electronic unit.

### Example

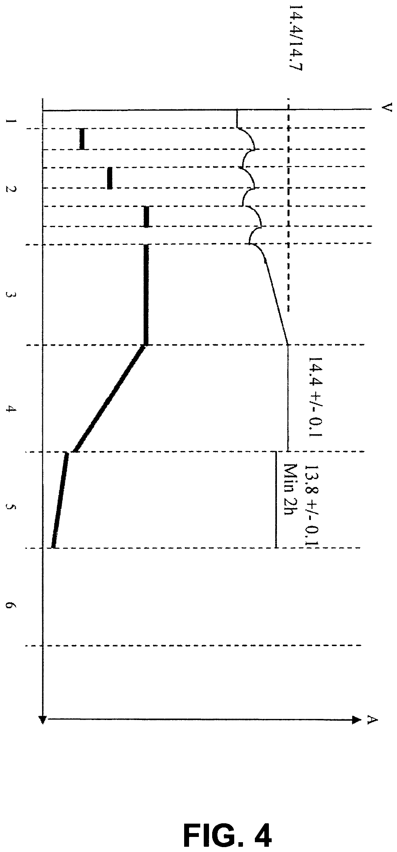

A typical course of charging at 4 A is shown in fig. 4.

The X-axis gives the different steps described below, while the Y-axis gives the current in A.

| | **4 amp** | |
|---|---|---|
| Charging step | | |
| 1) Analyse the state | Measure the voltage at I=0 | |
| | 1 second | |
| | 5 sec. | |
| | Batt. Stat. ind. Time | |
| 2) Soft start Find battery size (Ah capacity) | Start charging at constant current 1, 2, 4 A measure voltage | |
| | Increase current if ΔV < 0.2V | |
| | 15 sec on (always wait 15 sec to the next current level) 15 sec off x3 | |
| | If AV >= 0.2V charge directly with existing current 1-2-4 A | |
| 3) Main charging | Start main charging at correct current level according to battery size. | |
| | Max time | 4 amp 12 h |
| | | 2 amp 8 h |
| | | 1 amp 2 h |
| 4) Top charging | Constant. Voltage 14.4 V until I<1A | |
| | Max time | 4 amp 6 h |
| | | 2 amp 4 h |
| | | 1 amp 3 h |
| 5) Maintenance charging | 13.8 V min at 4 h max 24 h from step 1 | |
| 6) Analyse | Turn off charging measure voltage | |
| 7) Rest mode | Rest until next week | |
| | If Vbat < 12.7 V go to step 8 | |
| 8) Waking | Waking, start new charge cycle | |

In this embodiment example the indicator comprises five LED lamps and one warning lamp. These will give the user the following indications:
Step 0 Check output charge line
the crocodile
2^{nd} the 12 V plug

Step 1 Analyse
Start timer counter
Measure battery voltage
Indicate battery status green light

| | |
|---|---|
| >12.65 V | all five segments light up |
| 12.55 V -12.65 V | four segments light up |
| 12.45 V-12.55V | three segments light up |
| 12.35 V-12.45V | two segments light up |
| 3.5 V - 12.35 V | one segment lights up |
| < 3.5 V Error mode Warning Triangle red light | |

Step 2 Soft Start
LED indication
   1 amp: one LED blinking
   2 amp: two LEDs blinking
   4 amp: three LEDs blinking

Step 3 Main Charge
1^{st}, 2^{nd}, 3^{rd} LEDs/charging indication
If battery not connected the warning light will light up.
If wrong polarity the warning light will light up.

Step 4 Top Charge
1^{st}, 2^{nd}, 3^{rd}, 4^{th} LEDs/charging indication
Step 5 Maintain charge
All five segments light Green (no blinking)
After 24 h Go to sleep I=0A Step 7
All segments pulsing from low to high intensity.
2 sec increase intensity
Turn off 1 sec
and so on

Step 6 Analyse
1^{st}, 2^{nd} 3^{rd}, 4^{th}, 5^{th} LEDs/charging indication
Measure the voltage after 2 mins, I=0A
If Vbat > 13.0 V after 2 mins OK Go to step 6
If Vbat < 13.0 V after 2 mins OK Go to Error RED warning turns on (no blinking)

Step 7 Sleep
No special indication
Step 8 Wake up
Go to Step 1 for new charging cycle.
14.7 V Button

## Claims

1. Charging device (1) for charging of lead batteries and other rechargeable battery types, encompassing a housing (2) with a transformer, cable (3) with a plug (4) for connecting to the mains, cables (5, 6) for supply of electric power to a battery, clamping devices (7, 8) for connection to the poles of a battery, switch (11) for the activation and deactivation of the charging device (1) and at least one visual indicator (12) to give the user an indication of the charging progress, **characterised in that** the housing (2) is of such design that the cables (3, 5, 6) and the plug (4) are completely or partly lying inside the housing (2) and the clamping devices (7, 8) are fastened to holding means (9, 10) that protrude from the housing when the device is not in use, as each holding means (9, 10) encompasses two protruding elements, that the cables (5, 6) for connection to the battery are coiled around the circumference of the housing (2) between each of the protruding elements of the respective holding means (9, 10).

2. Charging device according to claim 1,
**characterised in that** the cable (3) for connecting to the mains is coiled around the periphery of the housing (2) and that the plug (4) is placed in a recess in the housing (2) when the device is not in use.

3. Charging device (1) according to any of the preceding claims,
**characterised in that** the path of the coiling of the cable (3) with the plug (4) and the cables (5, 6) for connection to the battery are, in the main, in parallel and axially displaced in relation to each other.

4. Charging device (1) according to any of the preceding claims,
**characterised in that** the device (1) further incorporates an electronic unit that measures/senses which type of battery that is to be charged, the surrounding temperature and the capacity of the battery.

5. Charging device (1) according to claim 3,
**characterised in that** the electronic unit controls the charging voltage and the charging process as a function of the measured parameters.

6. Charging device (1) according to any of the preceding claims,
**characterised in that** it is adapted to charging of open and closed lead batteries, AMG batteries and gel batteries with a capacity of 4-225 Ah.

7. Charging device (1) according to any of the preceding claims,
**characterised in that** the indicator (12) comprises at least one LED.

## Patentansprüche

1. Ladegerät (1) zum Laden von Bleibatterien und anderen wiederaufladbaren Batterietypen, umfassend ein Gehäuse (2) mit einem Transformator, einem Kabel (3) mit einem Stecker (4) zum Verbinden mit dem Netz, Kabel (5, 6) zum Speisen der Batterie mit elektrischem Strom, Klemmvorrichtungen (7, 8) zur Verbindung mit den Polen einer Batterie, Schalter (11) zum Aktivieren und Deaktivieren der Ladevorrichtung (1) und mindestens einen Sichtindikator (12), um dem Benutzer ein Zeichen für den Ladevorgang zu geben, **dadurch gekennzeichnet, dass** das Gehäuse (2) so gebaut ist, dass die Kabel (3, 5, 6) und der Stecker (4) vollständig oder teilweise in dem Gehäuse (2) liegen und die Klemmvorrichtungen (7, 8) an Haltemitteln (9, 10) befestigt sind, die aus dem Gehäuse herausragen, wenn die Vorrichtung nicht in Gebrauch ist, da jedes Haltemittel (9, 10) zwei herausragende Elemente umfasst und die Kabel (5, 6) zwischen jedem der herausragenden Elemente der jeweiligen Haltemittel (9, 10) zur Verbindung mit der Batterie in Umfangsrichtung um das Gehäuse (2) herumgewickelt sind.

2. Ladegerät nach Anspruch 1,
**dadurch gekennzeichnet, dass** das Kabel (3) zum Verbinden mit dem Netz um den Außenrand des Gehäuses (2) gewickelt ist und dass der Stecker (4) in einer Vertiefung in dem Gehäuse (2) platziert ist, wenn die Vorrichtung nicht in Gebrauch ist.

3. Ladegerät (1) nach einem der vorangehenden Ansprüche,
**dadurch gekennzeichnet, dass** der Pfad der Aufwicklung des Kabels (3) bezüglich des Steckers (4) und der Kabel (5, 6) zur Verbindung mit der Batterie im Wesentlichen parallel und axial zueinander verschoben ist.

4. Ladegerät (1) nach einem der vorangehenden Ansprüche,
**dadurch gekennzeichnet, dass** die Vorrichtung (1) weiterhin eine elektronische Einheit aufweist, die misst/ermittelt, welcher Batterietyp aufgeladen werden soll sowie die Umgebungstemperatur und die Kapazität der Batterie.

5. Ladegerät (1) nach Anspruch 3,
**dadurch gekennzeichnet, dass** die elektronische Einheit die Ladespannung und den Ladevorgang als Funktion der gemessenen Parameter steuert.

6. Ladegerät (1) nach einem der vorangehenden Ansprüche,
**dadurch gekennzeichnet, dass** es zum Laden von offenen und geschlossenen Bleibatterien, AMG-Batterien und Gelbatterien mit einer Kapazität von 4-225 Ah geeignet ist.

7. Ladegerät (1) nach einem der vorangehenden Ansprüche,
**dadurch gekennzeichnet, dass** der Indikator (12) mindestens eine LED aufweist.

## Revendications

1. Dispositif de charge (1) pour charger des batteries au plomb et d'autres types de batteries rechargeables, renfermant un boîtier (2) avec un transformateur, un câble (3) avec une fiche (4) pour connexion au secteur, des câbles (5, 6) pour l'alimentation électrique d'une batterie, des dispositifs de serrage (7, 8) pour connexion aux pôles d'une batterie, un commutateur (11) pour l'activation et la désactivation du dispositif de charge (1) et au moins un indicateur visuel (12) pour donner à l'utilisateur une indication de la progression de la charge,
**caractérisé en ce que** le boîtier (2) est d'une conception telle que les câbles (3, 5, 6) et la fiche (4) se trouvent complètement ou partiellement à l'intérieur du boîtier (2) et les dispositifs de serrage (7, 8) sont fixés à des moyens de maintien (9, 10) qui font saillie depuis le boîtier quand le dispositif n'est pas en utilisation, comme chaque moyen de maintien (9, 10) renferme deux éléments saillants, **en ce que** les câbles (5, 6) pour connexion à la batterie sont enroulés autour de la circonférence du boîtier (2) entre chacun des éléments saillants des moyens de maintien respectifs (9, 10).

2. Dispositif de charge (1) selon la revendication 1,
**caractérisé en ce que** le câble (3) pour connexion au secteur est enroulé autour de la périphérie du boîtier (2) et **en ce que** la fiche (4) est placée dans un renfoncement du boîtier (2) quand le dispositif n'est pas en utilisation.

3. Dispositif de charge (1) selon l'une quelconque des revendications précédentes, **caractérisé en ce que** le chemin de l'enroulement du câble (3) avec la fiche (4) et les câbles (5, 6) pour connexion à la batterie sont, pour l'essentiel, déplacés en parallèle et axialement dans une relation mutuelle.

4. Dispositif de charge (1) selon l'une quelconque des revendications précédentes, **caractérisé en ce que** le dispositif (1) incorpore en outre une unité électronique qui mesure/détecte quel type de batterie est à charger, la température environnante et la capacité de la batterie.

5. Dispositif de charge (1) selon la revendication 3,
**caractérisé en ce que** l'unité électronique commande la tension de charge et le processus de charge en fonction des paramètres mesurés.

6. Dispositif de charge (1) selon l'une quelconque des revendications précédentes, **caractérisé en ce qu'**il est adapté pour la charge de batteries au plomb ouvertes et fermées, de batteries AMG et de batteries au gel ayant une capacité de 4-225 Ah.

7. Dispositif de charge (1) selon l'une quelconque des revendications précédentes, **caractérisé en ce que** l'indicateur (12) comprend au moins une DEL.
